# EUROPEAN PATENT APPLICATION

(11) **EP 4 827 080 A1**
(43) Date of publication of application: **21.10.2026**
(21) Application number: 26172633.5
(22) Date of filing: 16.04.2026
(51) Int. Cl.: H04N 7/18, G08B 13/196, G06V 20/52

(54) **SPONTANEOUS EDGE RECORDING**

(30) Priority: 16.04.2025 US 202563789748 P; 14.04.2026 US 202619647530
(71) Applicant: Tyco Fire & Security GmbH, 8212 Neuhausen am Rheinfall (CH)
(72) Inventor: MCCAMBRIDGE, John, Bangor, BT20 3NR (GB); WRIGHT, William Albert, Belfast, BT3 9ED (GB); FEE, Paul Francis, Belfast, BT8 6ZN (GB)
(74) Representative: Meissner Bolte Nürnberg

(57) **Abstract**

The present disclosure relates to a system that includes a processor, an image capturing device, and a storage sub-system. The image capturing device captures and stores a data stream locally. The storage sub-system communicates with the processor, which detects alert events and sends details to the storage sub-system. The storage sub-system logs these alert events, analyzes them to forecast future alerts, and sends request signals to the image capturing device for relevant data streams.

## Description

The present application claims priority to U.S. Provisional Patent Application Serial No. 63/789,748, entitled "SPONTANEOUS EDGE RECORDING" filed on April 16, 2025, the entire disclosures of which is incorporated by reference herein.

The present disclosure relates generally to security systems. More particularly, the present disclosure relates to spontaneous edge recording in security systems.

Rapid expansion of cloud services has significantly increased the demand for networked devices. Video monitoring services, like video surveillance, rely on cloud connectivity. Typically, these systems involve one or more cameras streaming video to a centralized recorder. This however uses unnecessary bandwidth and consequently cloud cost.

There is therefore felt a need to provide a spontaneous edge recording that alleviates the aforementioned drawbacks.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are disclosed in particular in the appended claims.

One implementation of the present disclosure relates to a system comprising a processor enabled circuit, at least one image capturing device, and a storage sub-system. The at least one image capturing device captures a data stream that includes a plurality of image frames within a field-of-view of the image capturing device. Further, the data steam is stored locally within a storage of the image capturing device. The storage sub-system communicates with the processor enabled circuit that may reside within the image capturing device or a remote device. The processor enabled circuit determines occurrence of an alert event and the storage sub-system receives details pertaining to the alert event from the processor enabled circuit.

Further, the storage sub-system includes a processing circuit that maintains an alert event log in a database of the storage sub-system. The processing circuit further generates a forecast based on the analysis of the alert event log, and subsequently generates a request signal per the forecast of the alert event. The storage sub-system communicates with the at least one image capturing device and transmits the request signal to the at least one image capturing device that in turn provides a data stream covering the period prior to and after the alert event.

In some aspects of the present disclosure, the processor enabled circuit is housed within the at least one image capturing device. In some other aspects, the processor enabled circuit is part of an event detector that is deployed in the vicinity of the at least one image capturing device.

Another implementation of the present disclosure relates to a method that includes one or more steps performed by a processing circuit comprising receiving details of an alert event from a processor enabled circuit, maintaining an alert event log, analyzing the alert event log to generate a forecast of alert event, and generate a request signal per the forecast of the alert event to request a data stream from at least one image capturing device. The data steam covers the period prior to and after the alert event.

In one other implementation of the present disclosure, the system comprises a database and a processing circuit. The processing circuit receives details of an alert event from a remote device. The processing circuits maintains an alert event log in the database and analyzes the alert event log to generate an alert prediction model to determine future alert occurrences.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a perspective view schematic drawing of a building with a security system, according to some aspects.
FIG. 2 is a block diagram of building security systems for multiple buildings communicating with a cloud-based security system, according to some aspects.
FIG. 3 is a block diagram illustrating several components of an access control system (ACS) that can be implemented in the building security systems of FIG. 2, according to some aspects.
FIG. 4 is a block diagram of a video monitoring system, according to some aspects of the present disclosure.
FIG. 5 shows a method to request data stream from at least one image capturing device, according to some aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The described features generally relate to spontaneous edge recording and its application in video monitoring within security systems. In such systems, one or more image capturing devices capture data streams of regions of interest and stream video to a centralized recorder, typically relying on continuous cloud connectivity. This conventional approach, however, consumes unnecessary bandwidth and consequently increases cloud cost. For example, in a conventional deployment, each image capturing device may continuously transmit high-definition video data over the network to a cloud-based or centralized storage system, regardless of whether any security-relevant event is occurring within the monitored space. This results in a substantial volume of data being transmitted and stored that has no forensic or operational value. As the rapid expansion of cloud services has significantly increased the demand for networked devices, the need for more efficient and intelligent recording mechanisms has become critical to managing both network resources and storage requirements in modern security deployments. The spontaneous edge recording architecture described herein addresses these challenges by shifting recording intelligence to the edge, where data streams are captured and stored locally at the image capturing device and selectively transmitted only when an alert event is detected or predicted.

Such bandwidth and cost challenges are particularly acute in large-scale security deployments involving multiple buildings and numerous image capturing devices, where continuous streaming of high-definition video data to centralized or cloud-based storage systems places a substantial burden on network infrastructure. For instance, a security deployment spanning multiple buildings may include dozens or hundreds of image capturing devices, each generating continuous high-definition video data that must be transmitted over the network to the cloud server. The aggregate bandwidth consumed by such continuous streaming can saturate network capacity and incur significant cloud storage and data transfer costs. In these scenarios, the majority of recorded video data may not correspond to any meaningful security event, resulting in significant storage of irrelevant footage and inefficient utilization of available resources. Furthermore, when an alert event does occur, retrieving relevant video footage from a centralized system may introduce latency, potentially delaying the response to security incidents. This retrieval latency may be compounded in deployments where the cloud server 216 stores data from multiple buildings, as the system must search through large volumes of stored footage to locate and deliver the relevant data stream. Mandating continuous streaming of all video data to the cloud may not be optimal, as the relevance and urgency of the data depend on real-time conditions within the monitored space.

The present implementations address this problem by introducing a spontaneous edge recording architecture that leverages local data storage at the image capturing device, alert event detection, and predictive analytics to intelligently request relevant video streams. For example, a processor enabled circuit determines the occurrence of an alert event, and a storage sub-system receives details pertaining to the alert event from the processor enabled circuit. The processor enabled circuit may be housed within the image capturing device itself, or it may be part of a remote device such as an event detector deployed in the vicinity of the image capturing device, configured to detect one or more parameters indicative of the alert event. The storage sub-system includes a processing circuit that maintains an alert event log in a database, analyzes the alert event log to generate a forecast of future alert event occurrences, and subsequently generates a request signal per the forecast. The request signal is transmitted to the at least one image capturing device, which in turn provides a data stream covering the period prior to and after the alert event. These mechanisms enable the system to acquire only the most relevant video data on demand, rather than relying on continuous streaming to a centralized recorder.By transmitting only event-relevant data streams, the architecture significantly reduces the volume of data transmitted over the network and stored on the cloud server, thereby lowering both bandwidth consumption and cloud storage costs while preserving critical evidentiary footage.

The solution may also include procedures to ensure that the requested data stream is reliably captured and accurately correlated with the alert event, such as timestamping the data stream at the image capturing device and storing the timestamped data stream in internal storage. In some aspects, the image capturing device timestamps each frame or segment of the data stream with a date and time value, enabling precise temporal correlation between the captured video footage and the detected alert event. The timestamped data stream may be stored in an internal storage of the image capturing device, which may include non-volatile memory such as flash memory, a solid-state drive, or other suitable storage media capable of retaining data locally at the edge. The alert prediction model, which in some aspects is an Artificial Intelligence based model backed by trained data, enables the data analyzer to predict future alert event occurrences and proactively request data streams from the image capturing devices in anticipation of forecasted events. The trained data used to back the Artificial Intelligence based alert prediction model may include historical alert event logs, environmental data, temporal patterns, and other contextual information that enable the model to identify recurring patterns and generate accurate forecasts of future alert events. This adaptive approach enables the security system to capture comprehensive video evidence surrounding alert events while minimizing unnecessary data transmission, thereby reducing bandwidth consumption, lowering cloud costs, and improving overall system responsiveness.

Particular implementations of the subject matter described in this disclosure can be implemented to realize one or more of the following potential advantages. The disclosed techniques significantly enhance the efficiency and effectiveness of video monitoring in security systems by enabling spontaneous edge recording driven by alert event detection and predictive analytics. By storing data streams locally at the image capturing device and transmitting only the relevant footage upon request, the system reduces bandwidth usage and cloud storage costs that arise from continuous video streaming. In some aspects, the local storage of data streams at the image capturing device enables the system to maintain a rolling buffer of video data, such that when an alert event is detected, the data stream covering the period prior to the alert event is already available for immediate transmission without requiring continuous cloud upload. The use of an alert prediction model to forecast future alert occurrences allows the system to proactively capture high-definition footage around predicted events, ensuring that critical video evidence is preserved without requiring constant data transmission. This proactive approach is particularly advantageous in scenarios where recurrent alert events exhibit temporal or spatial patterns, as the data analyzer can leverage the alert prediction model to anticipate such events and pre-position the system for targeted data capture. The present implementations also provide improved scalability for multi-building security deployments, flexible integration of various event detection modalities, and enhanced adaptability to real-time security conditions within monitored spaces. Furthermore, the modular architecture of the video monitoring system, including the stream receiving module, the data logger, the data analyzer, and the evidence collector module, enables independent scaling of each functional component to accommodate deployments of varying size and complexity.

As such, the implementations set forth herein relate to techniques for improving the efficiency and intelligence of video recording in security systems by enabling spontaneous, event-driven data capture at the edge. The present implementations allow the storage sub-system to receive alert event details from a processor enabled circuit, maintain an alert event log, and employ predictive analytics to forecast future alert occurrences. The alert event log maintained by the data logger within the database provides a comprehensive record of detected alert events, including alert detection time, type of alert event, span of alert event, and location of the occurrence of the alert event within the monitored space, which serves as the foundation for the predictive analytics performed by the data analyzer. This allows the system to dynamically generate request signals to image capturing devices based on both detected and predicted alert events, thereby acquiring targeted data streams that cover the period before and after each event. In some aspects, the evidence collector module generates the request signal upon each predicted future alert event occurrence, and the request signal may include identifiers that enable the at least one image capturing device to identify the request and transmit the corresponding data stream. The present implementations also support local storage and compression of data streams at the image capturing device, integration with diverse processor enabled circuits for alert detection, and coordination among multiple system components, resulting in reduced bandwidth consumption, lower cloud costs, improved evidence collection, and overall enhanced security system performance under varying operational conditions. The compression of data streams at the image capturing device may employ standard video compression algorithms to reduce the size of stored footage, thereby extending the effective storage capacity of the internal storage and enabling longer retention of locally cached video data prior to transmission.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

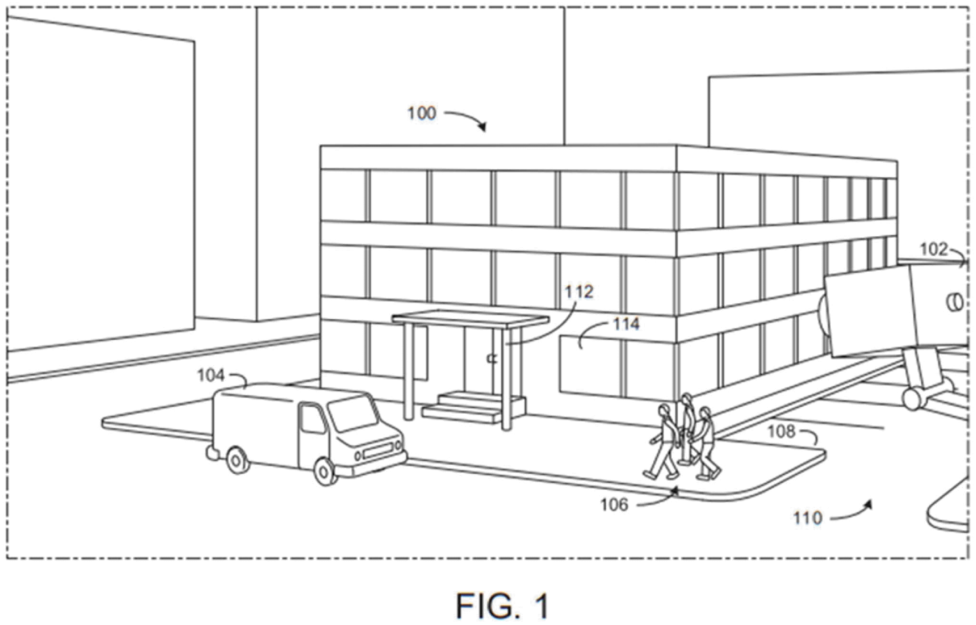

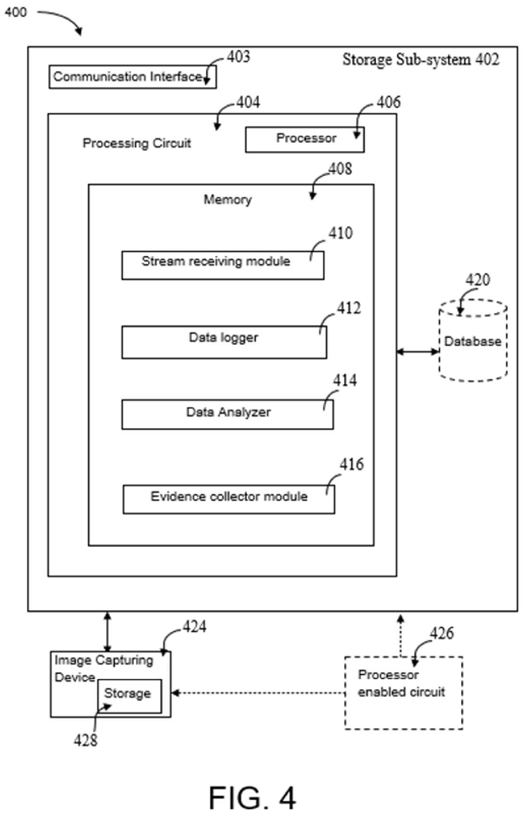

Various aspects or features will be presented in terms of systems that can include a number of devices, components, modules, and the like. It is to be understood and appreciated that the various systems can include additional devices, components, modules, etc. and/or may not include all of the devices, components, modules etc. discussed in connection with the figures. A combination of these approaches can also be used
Referring now to **FIG. 1****,** a building 100 with a security camera 102 and a parking lot 110 is shown, according to an exemplary aspect. The building 100 is a multi-story commercial building surrounded by, or near, the parking lot 110 but can be any type of building in some aspects. The building 100 may be a school, a hospital, a store, a place of business, a residence, a hotel, an office building, an apartment complex, etc. The building 100 can be associated with the parking lot 110. In some aspects, the building 100 may include one or more floors, wings, or sections, each of which may be monitored by one or more security cameras 102 deployed at strategic locations to maximize coverage of the building 100 and its surrounding areas, including entrances, exits, hallways, stairwells, and loading docks. The security camera 102 may correspond to the at least one image capturing device 424 described further herein with reference to FIG. 4.

Both the building 100 and the parking lot 110 are at least partially in the field of view of the security camera 102. In some aspects, multiple security cameras 102 may be used to capture the entire building 100 and parking lot 110 not in (or in to create multiple angles of overlapping or the same field of view) the field of view of a single security camera 102. The parking lot 110 can be used by one or more vehicles 104 where the vehicles 104 can be either stationary or moving (e.g. busses, cars, trucks, delivery vehicles). The building 100 and parking lot 110 can be further used by one or more pedestrians 106 who can traverse the parking lot 110 and/or enter and/or exit the building 100. The building 100 may be further surrounded, or partially surrounded, by a sidewalk 108 to facilitate the foot traffic of one or more pedestrians 106, facilitate deliveries, etc. In other aspects, the building 100 may be one of many buildings belonging to a single industrial park, shopping mall, or commercial park having a common parking lot and security camera 102. In another aspect, the building 100 may be a residential building or multiple residential buildings that share a common roadway or parking lot. Each security camera 102 may be configured to locally store its captured data stream within an internal storage, as described further herein, thereby enabling spontaneous edge recording without requiring continuous streaming to a centralized recorder or cloud server. The overlapping fields of view among multiple security cameras 102 may provide redundant coverage, such that the storage sub-system 402 can request data streams from multiple image capturing devices to assemble a comprehensive view of an alert event from different vantage points.

The building 100 is shown to include a door 112 and multiple windows 114. An access control system can be implemented within the building 100 to secure these potential entrance ways of the building 100. For example, badge readers can be positioned outside the door 112 to restrict access to the building 100. The pedestrians 106 can each be associated with access badges that they can utilize with the access control system to gain access to the building 100 through the door 112. Furthermore, other interior doors within the building 100 can include access readers. In some aspects, the doors are secured through biometric information, e.g., facial recognition, fingerprint scanners, etc. The access control system can generate events, e.g., an indication that a particular user or particular badge has interacted with the door. Furthermore, if the door 112 is forced open, the access control system, via door sensor, can detect the door forced open (DFO) event. In some aspects, the DFO event detected by the access control system may constitute an alert event as described herein, and the details of the DFO event may be communicated to the storage sub-system 402 via the processor enabled circuit 426, thereby triggering the spontaneous edge recording process to request relevant data streams from nearby image capturing devices.

The windows 114 can be secured by the access control system via burglar alarm sensors. These sensors can be configured to measure vibrations associated with the window 114. If vibration patterns or levels of vibrations are sensed by the sensors of the window 114, a burglar alarm can be generated by the access control system for the window 114.In some aspects, the burglar alarm generated by the access control system may be treated as an alert event, with the details of the alarm being forwarded to the processor enabled circuit 426 for communication to the storage sub-system 402, thereby initiating the spontaneous edge recording workflow. The processor enabled circuit 426 or the remote device housing the processor enabled circuit 426 may be configured to receive sensor data from the burglar alarm sensors and apply analytics to determine whether the detected vibration pattern constitutes a genuine alert event warranting a data stream request.

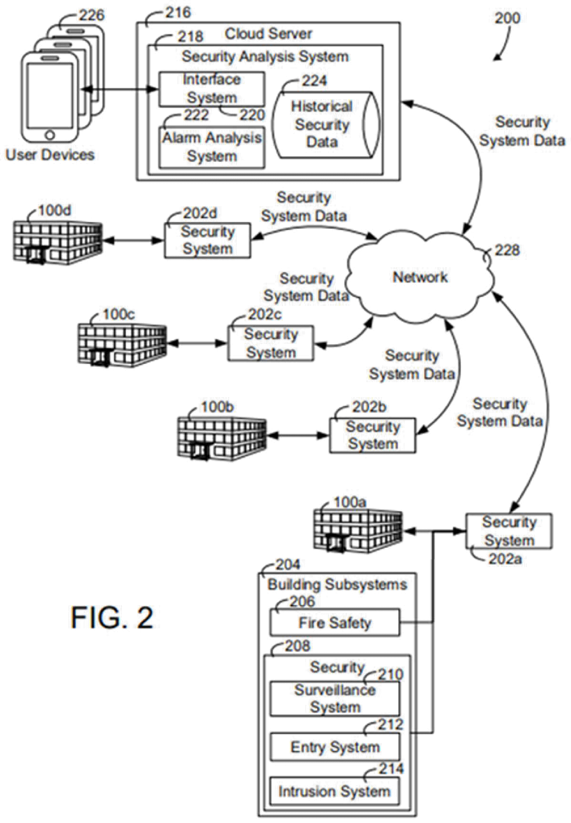

Referring now to **FIG. 2****,** a security system 200 is shown for multiple buildings, according to an exemplary aspect. The security system 200 is shown to include buildings 100a-100d. Each of buildings 100a-100d is shown to be associated with a security system 202a-202d. The buildings 100a-100d may be the same as and/or similar to building 100 as described with reference to FIG. 1. The security systems 202a-202d may be one or more controllers, servers, and/or computers located in a security panel or part of a central computing system for a building. In some aspects, each security system 202a-202d may include or communicate with one or more storage sub-systems 402 and one or more image capturing devices 424, as described further herein with reference to FIG. 4, to implement the spontaneous edge recording architecture within the respective building. The security systems 202a-202d may operate independently within their respective buildings while also communicating collected security system data and alert event information to the cloud server 216 for centralized aggregation and analysis.

The security systems 202a-202d may communicate with, or include, various security sensors and/or actuators, building subsystems 204. For example, fire safety subsystems 206 may include various smoke sensors and alarm devices, carbon monoxide sensors, alarm devices, etc. Security subsystems 208 are shown to include a surveillance system 210, an entry system 212, and an intrusion system 214. The surveillance system 210 may include various video cameras, still image cameras, and image and/or video processing systems for monitoring various rooms, hallways, parking lots, the exterior of a building, the roof of the building, etc. In some aspects, the video cameras of the surveillance system 210 may correspond to the at least one image capturing device 424, and the image and/or video processing systems may include or interface with the processor enabled circuit 426, as described herein. The surveillance system 210 may thereby serve as the front-end capture layer of the spontaneous edge recording architecture, with each camera locally storing its data stream and selectively transmitting footage upon request from the storage sub-system 402. The entry system 212 can include one or more systems configured to allow users to enter and exit the building (e.g., door sensors, turnstiles, gated entries, badge systems, etc.) The intrusion system 214 may include one or more sensors configured to identify whether a window or door has been forced open. The intrusion system 214 can include a keypad module for arming and/or disarming a security system and various motion sensors (e.g., IR, PIR, etc.) configured to detect motion in various zones of the building 100a. In some aspects, events generated by the entry system 212 and the intrusion system 214 may constitute alert events that are communicated to the processor enabled circuit 426 for processing by the storage sub-system 402, thereby enabling the spontaneous edge recording process to capture relevant video data surrounding those events.

Each of buildings 100a-100d may be located in various cities, states, and/or countries across the world. There may be any number of buildings 100a-100d. The buildings 100a-100d may be owned and operated by one or more entities. For example, a grocery store entity may own and operate buildings 100a-100d in a particular geographic state. The security systems 202a-202d may record data from the building subsystems 204 and communicate collected security system data to the cloud server 216 via network 228.In some aspects, the alert event logs maintained by the storage sub-systems 402 at each building may be aggregated at the cloud server 216, enabling cross-building analysis of alert event patterns and facilitating the generation of alert prediction models that account for trends spanning multiple physical locations. This aggregated analysis may improve the accuracy of future alert event forecasts by leveraging a larger dataset of historical alert events.

In some aspects, the network 228 communicatively couples the devices, systems, and servers of the system 200. In some aspects, the network 228 is at least one of and/or a combination of a Wi-Fi network, a wired Ethernet network, a ZigBee network, a Bluetooth network, and/or any other wireless network. The network 228 may be a local area network and/or a wide area network (e.g., the Internet, a building WAN, etc.) and may use a variety of communications protocols (e.g., BACnet, IP, LON, etc.). The network 228 may include routers, modems, and/or network switches. The network 228 may be a combination of wired and wireless networks. The network 228 may be utilized by the storage sub-system 402 and the image capturing devices 424 to communicate request signals, data streams, alert event details, and other information necessary for implementing the spontaneous edge recording architecture. In some aspects, the bandwidth available on the network 228 may be dynamically allocated to prioritize the transmission of data streams associated with detected or predicted alert events over routine network traffic, thereby ensuring timely delivery of event-relevant video footage to the storage sub-system 402.

The cloud server 216 is shown to include a security analysis system 218 that receives the security system data from the security systems 202a-202d of the buildings 100a-100d. The cloud server 216 may include one or more processing circuits (e.g., memory devices, processors, databases) configured to perform the various functionalities described herein. The cloud server 216 may be a private server. In some aspects, the storage sub-system 402 of the video monitoring system 400 may reside on or communicate with the cloud server 216 to store received data streams, alert event logs, and predicted future alert event occurrences in a centralized database. Alternatively, the storage sub-system 402 may be deployed as an on-premises system within one of the buildings 100a-100d, in which case the cloud server 216 may serve as a secondary or backup storage location for the data streams and alert event logs maintained by the storage sub-system 402.

A processing circuit of the cloud server 216 can include one or more processors and memory devices. The processor can be a general purpose or specific purpose processor, an application specific integrated circuit (ASIC), one or more field programmable gate arrays (FPGAs), a group of processing components, or other suitable processing components. The processor may be configured to execute computer code and/or instructions stored in a memory or received from other computer readable media (e.g., CDROM, network storage, a remote server, etc.). In some aspects, the processing circuit of the cloud server 216 may execute one or more modules associated with the data analyzer 414 and/or the evidence collector module 416 of the storage sub-system 402, enabling cloud-based generation of alert prediction models and request signals. The processing circuit may also be configured to perform machine learning training operations on aggregated alert event log data received from multiple buildings 100a-100d to improve the accuracy of the alert prediction model over time.

The memory can include one or more devices (e.g., memory units, memory devices, storage devices, etc.) for storing data and/or computer code for completing and/or facilitating the various processes described in the present disclosure. The memory can include random access memory (RAM), read-only memory (ROM), hard drive storage, temporary storage, non-volatile memory, flash memory, optical memory, or any other suitable memory for storing software objects and/or computer instructions. The memory can include database components, object code components, script components, or any other type of information structure for supporting the various activities and information structures described in the present disclosure. The memory can be communicably connected to the processor via the processing circuit and can include computer code for executing (e.g., by the processor) one or more processes described herein.

In some aspects, the cloud server 216 can be located on premises within one of the buildings 100a-100d. For example, a user may wish that their security, fire, or HVAC data remain confidential and have a lower risk of being compromised. In such an instance, the cloud server 216 may be located on-premises instead of within an off-premises cloud platform. When the cloud server 216 is deployed on-premises, the storage sub-system 402 may communicate with the cloud server 216 over the local area network, thereby reducing latency in transmitting data streams and alert event details. This on-premises deployment may be particularly advantageous for the spontaneous edge recording architecture, as it enables faster request signal generation and data stream retrieval by eliminating wide area network transmission delays.

The security analysis system 218 may implement an interface system 220, an alarm analysis system 222, and a database storing historical security data 224, security system data collected from the security systems 202a-202d. The interface system 220 may provide various interfaces of user devices 226 for monitoring and/or controlling the security systems 202a-202d of the buildings 100a-100d. The interfaces may include various maps, alarm information, maintenance ordering systems, etc. The historical security data 224 can be aggregated security alarm and/or event data collected via the network 228 from the buildings 100a-100d. The alarm analysis system 222 can be configured to analyze the aggregated data to identify insights, detect alarms, reduce false alarms, etc. The analysis results of the alarm analysis system 222 can be provided to a user via the interface system 220. In some aspects, the results of the analysis performed by the alarm analysis system 222 are provided as control actions to the security systems 202a-202d via the network 228.In some aspects, the historical security data 224 may be utilized by the data analyzer 414 of the storage sub-system 402 as supplemental training data for the alert prediction model, enabling the model to incorporate historical trends and patterns across multiple buildings and time periods. The alarm analysis system 222 may further be configured to communicate with the evidence collector module 416 to provide refined alert classifications that improve the specificity and accuracy of request signals generated by the evidence collector module 416.

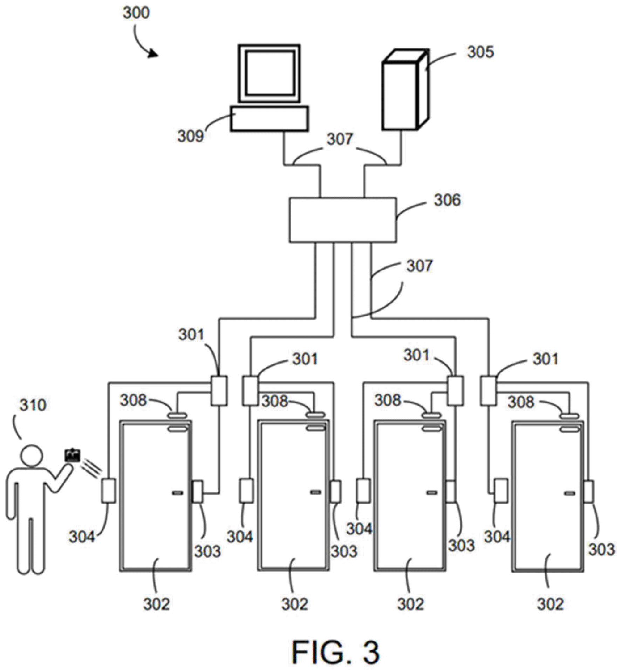

Referring now to **FIG. 3****,** a block diagram of an ACS 300 is shown, according to an exemplary aspect. The ACS 300 can be implemented in any of the buildings 100a-100d as described with reference to FIG. 2. The ACS 300 is shown to include a plurality of doors 302. Each of the doors 302 is associated with a door lock 303, an access reader module 304, and one or more door sensors 308. The door locks 303, the access reader modules 304, and the door sensors 308 may be connected to access controllers 301. The access controllers 301 may be connected to a network switch 306 that directs signals, according to the configuration of the ACS 300, through network connections 307 (e.g., physical wires or wireless communications links) interconnecting the access controllers 301 to an ACS server 305 (e.g., the cloud server 216). The ACS server 305 may be connected to an end-user terminal or interface 309 through network switch 306 and the network connections 307. In some aspects, the access controllers 301 may be configured to communicate access events, including unauthorized access attempts and DFO events, to the processor enabled circuit 426 of the video monitoring system 400, thereby serving as a source of alert events that can trigger the spontaneous edge recording process. The network connections 307 may overlap with or be part of the network 228, enabling seamless communication between the ACS 300 and the storage sub-system 402.

The ACS 300 can be configured to grant or deny access to a controlled or secured area. For example, a person 310 may approach the access reader module 304 and present credentials, such as an access card. The access reader module 304 may read the access card to identify a card ID or user ID associated with the access card. The card ID or user ID may be sent from the access reader module 304 to the access controller 301, which determines whether to unlock the door lock 303 or open the door 302 based on whether the person 310 associated with the card ID or user ID has permission to access the controlled or secured area. In some aspects, when the access controller 301 denies access to a person 310, the denial event may be classified as an alert event and communicated to the processor enabled circuit 426. The processor enabled circuit 426 may in turn forward the details of the denial event to the storage sub-system 402, triggering the evidence collector module 416 to generate a request signal to the at least one image capturing device 424 positioned in the vicinity of the door 302 to obtain a data stream covering the time period surrounding the denied access attempt.

Referring to **FIG. 4****,** a video monitoring system 400 is shown according to some aspects of the present disclosure. The video monitoring system 400 is shown to include a storage sub-system 402, at least one image capturing device 424, and a processor enabled circuit 426. The processor enabled circuit 426 is a hardware circuit board that can be a standalone device in some aspects. In some other aspects, the processor enabled circuit 426 can be part of the image capturing device 424. In yet another aspect, the processor enabled circuit 426 may be part of a remote device (not shown in figures) that is deployed in the vicinity of the at least one image capturing device 424 or within the field of view of the image capturing device 424. The processor enabled circuit 426 may have communication capability to transmit wireless signals using a dedicated communication unit. In some aspects, the processor enabled circuit 426 may utilize communication capabilities of the image capturing device 424 or the remote device. The processor enabled circuit 426 may include one or more sensors, microprocessors, and/or signal processing components configured to detect one or more parameters indicative of an alert event, such as sound, temperature, motion, light, or other environmental characteristics. When the processor enabled circuit 426 is a standalone device, it may be positioned at a strategic location within the monitored space to optimize detection of the one or more parameters. The processor enabled circuit 426 communicates with the storage sub-system 402 via the communication interface 403 to transmit details pertaining to detected alert events.

In some aspects, the at least one image capturing device 424 is a security camera as shown in FIG. 1. The image capturing device 424 may be a PTZ camera, i.e., Pan Tilt and Zoom camera provided with motion tracking and person detection capabilities. In some examples, the image capturing device 424 can be red, green, blue (RGB) cameras, infrared cameras, depth cameras, etc. The at least one image capturing device 424 may be an edge camera. The image capturing device 424 may be configured to observe the space falling within its field of view and capture a data stream of a region of interest. The data stream may include, but is not limited to, plurality of image frames/video data, audio data, and/or associated metadata. In some aspects, the image capturing device 424 may be configured to determine the region of interest within its field of view. Alternatively, the entire field of view of the image capturing device 424 may be considered as the region of interest. In some examples, the region of interest within the field of view of the image capturing device 424 may vary depending on presence of an object. The image capturing device 424 may be enabled to follow the detected object by using its motion detection or person detection capabilities. In some aspects, the metadata associated with the data stream may include, but is not limited to, timestamps, camera identifier, geolocation information, resolution settings, frame rate, and environmental conditions at the time of capture. The PTZ camera capabilities enable the image capturing device 424 to dynamically adjust its field of view in response to a detected alert event, thereby capturing more detailed footage of the region where the alert event occurred. In some aspects, the image capturing device 424 may be configured to automatically increase its recording resolution or frame rate upon receiving a request signal from the storage sub-system 402 or upon local detection of an alert event by the processor enabled circuit 426 housed within the image capturing device 424.

In some aspects, the data stream captured by the image capturing device 424 is stored locally within an internal storage 428 of the image capturing device 424. In some aspects of the present disclosure, the data stream stored locally within the internal storage 428 may be compressed to save storage space. In some other aspects of the present disclosure, the image capturing device 424 may initially store data stream in a high-definition format for a certain defined time period and subsequently, once the defined time period has elapsed, the high-definition data stream may be compressed. The internal storage 428 may include non-volatile memory such as flash memory, a solid-state drive (SSD), a micro SD card, or other suitable storage media capable of retaining data locally at the edge device. In some aspects, the internal storage 428 may operate as a circular buffer, continuously overwriting the oldest data with the most recently captured data stream, thereby ensuring that recent footage is always available for transmission in response to a request signal from the evidence collector module 416. The defined time period during which the high-definition data stream is retained before compression may be configurable by an administrator via the interface system 220 or pre-defined based on the storage capacity of the internal storage 428 and the expected frequency of alert events at the deployment location.

Still referring to FIG. 4, the storage sub-system 402 is shown to include a communication interface 403, a processing circuit 404, and a database 420. Communication interface 403 may include wired or wireless interfaces (e.g., jacks, antennas, transmitters, receivers, transceivers, wire terminals, etc.) for conducting data communications with various systems, devices, or networks. For example, communication interface 403 may include an Ethernet card and port for sending and receiving data via an Ethernet-based communications network and/or a Wi-Fi transceiver for communicating via a wireless communications network. Communication interface 403 may be configured to communicate via local area networks or wide area networks (e.g., the Internet, a building WAN, etc.) and may use a variety of communication protocols (e.g., BACnet, IP, LON, etc.). In some aspects, the communication interface 403 supports multiple communication protocols simultaneously, enabling the storage sub-system 402 to communicate with heterogeneous devices within the video monitoring system 400, including image capturing devices 424 of varying manufacturers or communication standards and processor enabled circuits 426 that may utilize different wireless or wired communication technologies. The communication interface 403 may also implement secure communication protocols, such as Transport Layer Security (TLS) or equivalent encryption mechanisms, to protect the integrity and confidentiality of data streams, alert event details, and request signals transmitted between the storage sub-system 402 and the image capturing devices 424.

Communication interface 403 may be a network interface configured to facilitate electronic data communications between components of the video monitoring system 400 and various external systems or devices (e.g., remote device). In some aspects, the communication interface 403 may facilitate communication between the storage sub-system 402 and the cloud server 216 to enable remote access to the database 420, including the alert event logs, predicted future alert event occurrences, and stored data streams. The communication interface 403 may also enable the storage sub-system 402 to receive configuration updates, alert prediction model updates, and operational parameters from the cloud server 216 or from an administrator via the interface system 220.

The processing circuit 404 is shown to include a processor 406 and a memory 408. In some aspects, the storage sub-system 402 is an on-premises data recorder system. In some other aspects, the storage sub-system 402 is entirely or substantially or partially a cloud-based data recorder system. The processor 406 may be a general purpose or specific purpose processor, an application specific integrated circuit (ASIC), one or more field programmable gate arrays (FPGAs), a group of processing components, or other suitable process modeling components. The processor 406 may be configured to execute computer code or instructions stored in memory 408 or received from other computer readable media (e.g., CDROM, network storage, a remote server, etc.). In some aspects, the processor 406 is configured to execute the stream receiving module 410, the data logger 412, the data analyzer 414, and the evidence collector module 416 as software modules stored in the memory 408, thereby implementing the spontaneous edge recording logic within the processing circuit 404. When the storage sub-system 402 is partially cloud-based, the processor 406 may offload computationally intensive operations, such as training or updating the alert prediction model, to the cloud server 216 while retaining real-time alert event logging and request signal generation capabilities locally.

The memory 408 may include one or more devices (e.g., memory units, memory devices, storage devices, etc.) for storing data and/or computer code for completing and/or facilitating the various processes described in the present disclosure. The memory 408 may include random access memory (RAM), read-only memory (ROM), hard drive storage, temporary storage, non-volatile memory, flash memory, optical memory, or any other suitable memory for storing software objects and/or computer instructions. The memory 408 may include database components, object code components, script components, modules or any other type of information structure for supporting various activities and information structures described in the present disclosure. The memory 408 may be communicably connected to the processor 406 via the processing circuit 404 and may include computer code for executing (e.g., by processor 406) one or more processes described herein. In some aspects, the memory 408 stores the alert prediction model, the alert event log, and the predicted future alert event occurrences as data structures accessible by the data analyzer 414 and the evidence collector module 416. The memory 408 may also store configuration parameters that define the pre-determined time periods for data stream requests, the rules governing alert event log generation, and the thresholds utilized by the data analyzer 414 when applying the alert prediction model to the alert event log. In some aspects, the memory 408 is partitioned into separate regions allocated to each of the stream receiving module 410, the data logger 412, the data analyzer 414, and the evidence collector module 416, enabling concurrent execution of these modules by the processor 406.

The storage sub-system 402 may receive one or more data streams from the one or more image capturing devices 424, in accordance with aspects described herein. In some aspects, the storage sub-system 402 communicates with the processor enabled circuit 426 via the communication interface 403. The processor enabled circuit 426 determines generation of an alert event. Upon determining the occurrence of an alert event, the processor enabled circuit 426 transmits the details pertaining to the alert event to the storage sub-system 402 via the communication interface 403. The details may include, but are not limited to, the type of alert event detected, the time of detection, the location or zone within the monitored space where the alert event occurred, and one or more identifiers associated with the processor enabled circuit 426 or the image capturing device 424 in whose vicinity the alert event was detected. The storage sub-system 402 processes the received alert event details through the data logger 412, the data analyzer 414, and the evidence collector module 416, as described further herein.

In one aspect of the present disclosure, the processor enabled circuit 426 may be part of the image capturing device 424 and may be configured to perform one or more image processing techniques on the captured data stream to determine occurrence of the alert event. In one other aspect of the present disclosure, the processor enabled circuit 426 may be part of the remote device where the remote device can be a detector or a sensing device configured to detect one or more parameters within the space. The processor enabled circuit 426 may perform one or more analytics to determine occurrence of the alert event. For an example, the alert event can be gunshot detection where parameter observed could be sound of a gunshot. In some examples, the alert event could be fire within the space and the parameter being observed by the remote device could be temperature or fluid. Similarly, the image capturing device 424 may generate data stream of the space and the processor enabled circuit 426 may perform image analytics to determine presence a person with weapon. The afore-listed examples are for reference purpose only and the specification in no way restricts the placement of the processor enabled circuit 426 or detection of parameter to determine occurrence of the alert event. In some aspects, the image processing techniques performed by the processor enabled circuit 426 may include object detection, facial recognition, license plate recognition, anomaly detection, crowd density estimation, and behavioral analysis algorithms. When the processor enabled circuit 426 is part of the remote device, the remote device may be an acoustic sensor for gunshot detection, a thermal sensor for fire detection, a chemical sensor for gas leak detection, a vibration sensor for intrusion detection, or any other type of environmental sensor capable of detecting parameters indicative of an alert event. In some aspects, the processor enabled circuit 426 may apply machine learning or deep learning algorithms to the detected parameters to distinguish between genuine alert events and false positives, thereby reducing the number of unnecessary request signals generated by the evidence collector module 416.

Still referring to FIG. 4, the memory 408 is shown to include a stream receiving module 410, a data logger 412, a data analyzer 414, and an evidence collector module 416. In an aspect, the stream receiving module 410, the data logger 412, the data analyzer 414, and the evidence collector module 416 operate in tandem from receiving details of the alert event to storing the data stream in the database 420 of the storage sub-system 402.The tandem operation of these modules implements a pipeline architecture in which each module performs a specialized function: the stream receiving module 410 handles the ingestion of data streams from the image capturing devices 424; the data logger 412 manages the logging of alert event details and storage of received data streams; the data analyzer 414 performs predictive analytics to forecast future alert events; and the evidence collector module 416 generates and transmits request signals to the image capturing devices 424 based on detected and predicted alert events. This modular pipeline architecture enables efficient processing of alert events and data streams while maintaining separation of concerns among the functional components of the storage sub-system 402.

The stream receiving module 410 may communicate with the one or more image capturing devices 424 via the communication interface 403 to receive the data stream. In some aspects, the stream receiving module 410 may receive timestamped data stream from the one or more image capturing devices 424. In an aspect, the at least one image capturing device 424 transmits the time stamped data stream that contains a portion of the video captured prior to the alert event and a portion of the video captured post detection of the alert event. In other words, the image capturing device 424 sends a data stream containing video footage from both before and after the alert event. For instance, if the alert event occurs at 13:00 hours, the transmitted video may cover the period from 'X' time before 13:00 hours to 'Y' time after 13:00 hours. In this example, the durations 'X' and 'Y' may or may not be identical. The ability to transmit video footage from before the alert event is enabled by the local storage of the data stream within the internal storage 428 of the image capturing device 424, which maintains a rolling buffer of recently captured footage. In some aspects, the durations 'X' and 'Y' may be pre-configured by an administrator, dynamically determined based on the type and severity of the alert event, or defined by the request signal generated by the evidence collector module 416. For example, a higher-severity alert event such as gunshot detection may warrant a longer pre-event and post-event capture duration than a lower-severity alert event such as a motion detection event. The stream receiving module 410 may validate the integrity of the received timestamped data stream by verifying timestamp continuity and data stream completeness before forwarding the data stream to the data logger 412 for storage in the database 420.

The storage sub-system 402 is further shown to include the data logger 412 that cooperates with the stream receiving module 410 and the database 420. The data logger 412 receives the data stream from the stream receiving module 410 and stores the received data stream in the database 420. In some aspects, the data logger 412 correlates the received data stream with the alert event and stores in the database 420 for future reference. The correlation performed by the data logger 412 may include associating the received data stream with the corresponding alert event entry in the alert event log, linking the data stream to the specific image capturing device 424 from which it was received, and annotating the stored data stream with metadata such as the alert event type, detection time, and location. This correlated storage enables efficient retrieval of relevant data streams by security personnel or automated systems during subsequent investigation or review of alert events.

In some aspects, the data logger 412 is configured to communicate with the processor enabled circuit 426 via the communication interface 403. The data logger 412 is further configured to receive details of the alert event from the processor enabled circuit 426 and maintains an alert event log in the database 420. In an aspect, the details pertaining to the alert event stored along with the alert event log may include, but are not limited to, alert detection time, type of alert event, span of alert event, location of the occurrence of alert event within the space and the like. In some aspects, a separate alert event log may be maintained within the database 420 for different type of alert events. In other aspects, a single alert event log may be maintained within the database based on the alert detection time. The data logger 412 may be enabled to generate and store alert event log per pre-defined or user-defined rules stored within the database 420.In some aspects, the pre-defined or user-defined rules may specify criteria for categorizing alert events, thresholds for logging alert events of varying severity levels, retention policies governing how long alert event log entries are maintained within the database 420, and escalation rules that trigger immediate notification to security personnel upon logging of a high-severity alert event. The data logger 412 may also be configured to generate aggregate statistics from the alert event log, such as frequency distributions of alert event types over time, which may be utilized by the data analyzer 414 as input features for the alert prediction model. In some aspects, the data logger 412 may support querying and filtering of the alert event log by alert event type, time range, location, and associated image capturing device 424 identifier, enabling targeted retrieval of alert event history for analysis and reporting purposes.

The storage sub-system 402 is further shown to include the data analyzer 414. The data analyzer 414 communicates with the database 420 to retrieve the alert event log from the database 420. In some aspects, the data analyzer 414 may retrieve details pertaining to the alert event from the database 420 in addition to the alert event log. In an aspect, the data analyzer 414 is configured to utilize an alert prediction model stored within the database 420 to perform analytics on the alert event log and in some cases on the details pertaining to the alert event. The alert prediction model, in some aspects, is an Artificial Intelligence based model that is backed by a trained data. The data analyzer 414 performs analytics to predict future alert event occurrences based on application of the alert prediction model on the alert event log. The predicted future alert event occurrences are stored in the database 420.In some aspects, the Artificial Intelligence based alert prediction model may employ machine learning techniques including, but not limited to, supervised learning, unsupervised learning, reinforcement learning, neural networks, decision trees, support vector machines, or ensemble methods to identify patterns and correlations within the alert event log data. The trained data used to train the alert prediction model may include labeled historical alert event data, environmental sensor readings, temporal features such as time of day, day of week, and seasonal patterns, and spatial features such as the location of the alert event within the monitored space. In some aspects, the data analyzer 414 may retrain or update the alert prediction model periodically based on newly accumulated alert event log data, thereby enabling the model to adapt to evolving patterns of alert event occurrences over time. The data analyzer 414 may also generate a confidence score or probability value associated with each predicted future alert event occurrence, enabling the evidence collector module 416 to prioritize request signal generation based on the likelihood of each predicted event.

In some aspects, the prediction of future alert event occurrences may be for a pre-determined time period that can range from days to months. However, the data analyzer 414 may periodically evaluate the alert event logs and update the predicted future alert occurrences. The predicted future alert occurrences may include a date and time of the possibility of the occurrence of the event in the future. In some aspects, the predicted future alert occurrences may also include the predicted type of alert event, the predicted location within the monitored space, a confidence score indicating the likelihood of the event occurring, and a recommended pre-event and post-event capture duration for the data stream. The periodicity at which the data analyzer 414 re-evaluates the alert event logs and updates the predicted future alert occurrences may be configurable, for example, hourly, daily, or weekly, and may be adjusted based on the volume of new alert event log entries accumulated since the last evaluation. In some aspects, the data analyzer 414 may perform real-time or near-real-time evaluation of the alert event log upon each new entry by the data logger 412, enabling the predicted future alert occurrences to be continuously updated in response to changing conditions within the monitored space.

Still referring to FIG. 4, the evidence collector module 416 is configured to coordinate with the database 420 to access the predicted future alert occurrences. The evidence collector module 416 is configured to generate a request signal each time per the predicted future alert occurrences. For an example, the request signal may be generated by the evidence collector module 416 when one of the predicted future alert events occur. Subsequent to generation of the request signal, the evidence collector module 416 transmits the request signal via the communication interface 403. In some aspects, the request signal may include identifiers that enable the at least one image capturing device 424 to receive it and in turn transmit the data stream that covers the time period prior to and after the alert event. In some aspects, the identifiers included in the request signal may comprise a unique camera identifier corresponding to the at least one image capturing device 424 from which the data stream is being requested, a time window specifying the pre-event and post-event capture durations, and an alert event type identifier. The evidence collector module 416 may monitor the database 420 on a scheduled or event-driven basis to detect newly stored predicted future alert occurrences and to generate corresponding request signals in a timely manner. In some aspects, the evidence collector module 416 may implement a priority queue to manage multiple concurrent request signals, ensuring that request signals associated with higher-confidence predictions or higher-severity alert event types are transmitted to the image capturing devices 424 with higher priority.

In one aspect of the present disclosure, the predicted future alert event occurrences may be transmitted to the at least one image capturing device 424 and further may be stored within the storage 428 of the at least one image capturing device 424. The at least one image capturing device 424 may utilize the locally stored predicted future alert event occurrences for verification, fail safe mechanism, and the like. In one non-limiting aspect, the at least one image capturing device 424 may locally store and/or transmit high-definition footage of the video recording as the data stream for the time period around the predicted future alert event occurrence data. In some aspects, the fail safe mechanism enables the at least one image capturing device 424 to autonomously initiate high-definition data stream capture and local storage upon detecting that a predicted future alert event occurrence time has been reached, even in the absence of a request signal from the evidence collector module 416, such as when communication between the storage sub-system 402 and the image capturing device 424 is temporarily disrupted. The locally stored predicted future alert event occurrences may be periodically synchronized with the database 420 of the storage sub-system 402 to ensure consistency between the edge device and the centralized system. In some aspects, the image capturing device 424 may compare locally stored predicted future alert events against locally detected alert events to verify the accuracy of the alert prediction model and report verification results to the data analyzer 414 for model refinement.

In some aspects, the data logger 412 may generate a notification signal upon receipt of details of the alert event from the processor enabled circuit 426. The data logger 412 is configured to communicate with the evidence collector module 416 to transmit the notification signal. The evidence collector module 416 is enabled to generate the request signal subsequent to generation of the notification signal. Further, the evidence collector module 416 transmits the request signal to the at least one image capturing device 424 via the communication interface 403. The at least one image capturing device 424 subsequently transmits the time stamped data stream that contains a portion of video captured prior to the alert event and a portion of video captured post detection of the alert event. The stream receiving module 410 is configured to receive the time stamped data stream via the communication interface 403 and stores in the database 420.This notification-driven workflow represents a reactive data capture mode in which the system responds to a detected alert event in real time, as distinguished from the predictive data capture mode in which the evidence collector module 416 proactively generates request signals based on forecasted future alert event occurrences. In some aspects, both the reactive and predictive data capture modes may operate concurrently, with the reactive mode ensuring immediate capture of data streams upon alert event detection and the predictive mode ensuring pre-positioned capture around anticipated events. The data logger 412 may also timestamp the notification signal to create an auditable record of the time elapsed between alert event detection by the processor enabled circuit 426 and the subsequent transmission of the request signal by the evidence collector module 416, enabling system performance monitoring and optimization.

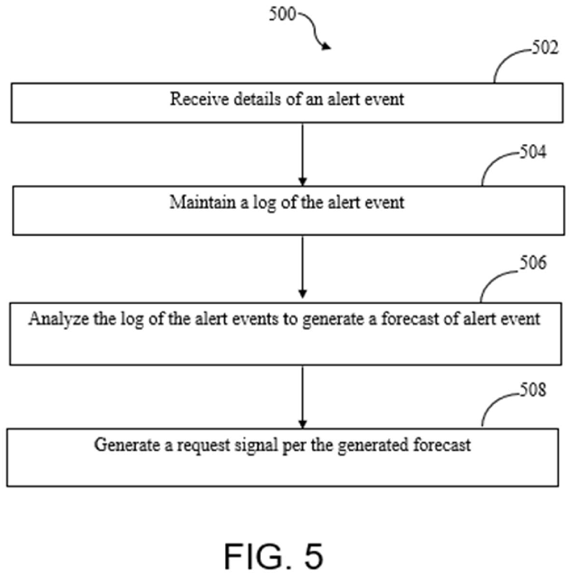

Referring now to **FIG. 5****,** a flow chart of a method 500 to request data stream from at least one image capturing device is shown, according to some aspects. In some aspects, the method 500 is performed by the storage sub-system 402 of the video monitoring system 400 (referred above in FIG. 4). Alternatively, in some aspects, the method 500 may be partially performed by the storage sub-system 402 and partially by the image capturing devices 424 (referred above in FIG. 4) or a remote device housing the processor enabled circuit 426 (referred above in FIG. 4).The method 500 implements the spontaneous edge recording workflow by orchestrating the receipt of alert event details, the maintenance of alert event logs, the generation of alert prediction models, and the issuance of request signals to the image capturing devices 424. The method 500 may be executed iteratively, with each iteration corresponding to the detection or prediction of a new alert event, and may be performed continuously during the operational period of the video monitoring system 400.

The method 500 is shown to include receiving details of an alert event from a processor enabled circuit 426 (Step 502). The processor enabled circuit 426 is configured to determine occurrence of an alert event. The method 500 is further shown to include maintaining a log of the alert event (Step 504). Data logger 412 of the processing circuit 404 is enabled to communicate with the processor enabled circuit 426 to receive the details of the alert event via the communication interface 403 and store the log of alert event in the database 420. In an aspect, the communication interface 403 may facilitate wired or wireless communication with the processor enabled circuit 426. In some aspects, the processor enable circuit 426 may be housed with the at least one image capturing device 424. In other aspects, the processor enabled circuit 426 may be housed within the remote device (not shown in figures). The remote device is deployed within a space being monitored by the at least one image capturing device 424.In some aspects, the details of the alert event received at Step 502 may include the alert detection time, the type of alert event, the severity of the alert event, the identifier of the processor enabled circuit 426 or remote device that detected the alert event, and the location or zone within the monitored space where the alert event occurred. At Step 504, the data logger 412 may classify the received alert event according to pre-defined or user-defined categorization rules and store the classified alert event entry in the appropriate alert event log within the database 420. In some aspects, the data logger 412 may also generate a notification signal at Step 504 to immediately trigger the evidence collector module 416 to generate a request signal for reactive data capture, as described above with reference to FIG. 4.

Still referring to FIG. 5, the method 500 is shown to include analyzing the log of the alert events to generate a forecast of the alert event at step 506. The processing circuit 404 includes a data analyzer 414 that retrieves the log of alert events from the database 420. Further, the data analyzer 414 is configured to perform analytics on the log of alert events by employing an alert prediction model to forecast the alert event. In an aspect, the alert prediction model is based on an Artificial Intelligence based model. At Step 506, the data analyzer 414 may apply the alert prediction model to the accumulated alert event log data to identify temporal, spatial, and contextual patterns indicative of future alert event occurrences. The Artificial Intelligence based model may process features extracted from the alert event log, including alert event frequency, time-of-day distributions, day-of-week patterns, seasonal variations, and spatial clustering of alert events within the monitored space. The output of Step 506 may include a set of predicted future alert event occurrences, each associated with a predicted date and time, predicted alert event type, predicted location, and a confidence score reflecting the model's certainty in the prediction. In some aspects, the data analyzer 414 may also perform anomaly detection on the alert event log to identify unusual patterns that may not conform to previously observed trends, and may generate supplemental predictions based on such detected anomalies.

Further, the method 500 at step 508 depicts generation of a request signal per the generated forecast. The step 508 is performed by the processing circuit 404. In some aspects, the processing circuit 404 includes the evidence collector module 416 as shown in FIG. 4 that is configured to generate the request signal based on the generated forecast. At Step 508, the evidence collector module 416 accesses the predicted future alert event occurrences stored in the database 420 and generates a request signal for each predicted event, specifying the target image capturing device 424, the desired pre-event and post-event capture durations, and any applicable recording parameters such as resolution or frame rate. The request signal is transmitted to the at least one image capturing device 424 via the communication interface 403, and the image capturing device 424 responds by transmitting the requested data stream, which is received by the stream receiving module 410 and stored in the database 420 by the data logger 412. In some aspects, the method 500 may return to Step 502 to receive details of subsequent alert events, thereby implementing a continuous loop of alert event detection, logging, prediction, and data stream acquisition that enables the spontaneous edge recording architecture to operate in an ongoing, autonomous manner throughout the deployment lifecycle of the video monitoring system 400.

### SOME ADDITIONAL EXAMPLES

The aspects described herein additionally include one or more of the following aspect examples described in the following numbered clauses. Any of these embodiments can be claimed in a separate claim, e.g. by substituting the word "Clause" by "Claim", in particular in the order as mentioned below and/or in any combination with any embodiment described above or with any of the features of the attached claims.

Clause 1. A system comprising: a processor enabled circuit to determine occurrence of an alert event; at least one image capturing device to capture a data stream of a region of interest, and locally store the data stream; and a storage sub-system comprising a processing circuit configured to: receive details of the alert event from the processor enabled circuit, and maintain an alert event log; examine the alert event log to create an alert prediction model to predict future alert occurrences; and generate a request signal per the future alert occurrences to request the at least one image capturing device to transmit a data stream covering a period prior to and after the alert event.

Clause 2. The system of clause 1, wherein the processor enabled circuit is housed within the at least one image capturing device.

Clause 3. The system of clause 1 or 2, wherein the at least one image capturing device is configured to transmit a high-definition data stream after the alert event.

Clause 4. The system of any of clauses 1 to 3, wherein the at least one image capturing device is configured to timestamp the data stream to obtain a time stamped data stream and store the time stamped data stream in an internal storage.

Clause 5. The system of clause 4, wherein the at least one image capturing device transmits the time stamped data stream that contains a portion of video captured prior to the alert event and a portion of video captured post detection of the alert event.

Clause 6. The system of any of the above clauses, wherein the processor enabled circuit is part of an event detector deployed in a vicinity of the at least one image capturing device, and configured to determine alert event based on detection of at least one parameter.

Clause 7. The system of any of the above clauses, wherein the processor enabled circuit applies one or more image processing techniques on the data stream captured by the at least one image capturing device to determine the alert event.

Clause 8. The system of any of the above clauses, wherein the data stream transmitted by the at least one image capturing device contains footage starting from a pre-determined time period prior to the alert event and terminating at a pre-determined time period after the alert event.

Clause 9. A method comprising: receiving, by a processing circuit, details of an alert event from a processor enabled circuit; maintaining, by the processing circuit, an alert event log; examining, by the processing circuit, the alert event log to generate an alert prediction model to predict future alert occurrences; and generating, by the processing circuit, a request signal per the future alert occurrences to request at least one image capturing device to transmit a data stream covering a period prior to and after the alert event.

Clause 10. The method of clause 9, wherein the processor enabled circuit is housed within the at least one image capturing device.

Clause 11. The method of clause 9 or 10, further comprising transmitting, by the at least one image capturing device, a high-definition data stream after the alert event.

Clause 12. The method of one of clauses 9 to 11, further comprising timestamping, by the at least one image capturing device, the data stream to obtain a time stamped data stream, and storing the time stamped data stream in an internal storage of the at least one image capturing device.

Clause 13. The method of clause 12, wherein the at least one image capturing device transmits the time stamped data stream that contains a portion of video captured prior to the alert event and a portion of video captured post detection of the alert event.

Clause 14. The method of any of clauses 9 to 13, wherein the processor enabled circuit is part of an event detector deployed in a vicinity of the at least one image capturing device, and configured to determine the alert event based on detection of at least one parameter.

Clause 15. A system comprising: a database; and a processing circuit to receive details of an alert event from a remote device, the processing circuit configured to: maintain an alert event log in the database; examine the alert event log to create an alert prediction model to predict future alert occurrences; and generate a request signal per the future alert occurrences to request at least one image capturing device to transmit a data stream covering a period prior to and after the alert event.

Clause 16. The system of clause 15, wherein the remote device comprises a processor enabled circuit housed within the at least one image capturing device.

Clause 17. The system of clause 15 or 16, wherein the at least one image capturing device is configured to transmit a high-definition data stream after the alert event.

Clause 18. The system of any of clauses 15 to 17, wherein the at least one image capturing device is configured to timestamp the data stream to obtain a time stamped data stream and store the time stamped data stream in an internal storage.

Clause 19. The system of clause 18, wherein the at least one image capturing device transmits the time stamped data stream that contains a portion of video captured prior to the alert event and a portion of video captured post detection of the alert event.

Clause 20. The system of any of clauses 15 to 19, wherein the data stream transmitted by the at least one image capturing device contains footage starting from a pre-determined time period prior to the alert event and terminating at a pre-determined time period after the alert event.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

The various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

The functions described herein may be implemented in hardware, software, or any combination thereof. If implemented in software executed by a processor, the functions may be stored on or transmitted over as one or more instructions or code on a non-transitory computer-readable medium. Other examples and implementations are within the scope and spirit of the disclosure and appended claims. For example, due to the nature of software, functions described above can be implemented using software executed by a specially programmed processor, hardware, hardwiring, or combinations of any of these. Features implementing functions may also be physically located at various positions, including being distributed such that portions of functions are implemented at different physical locations. Moreover, the term "or" is intended to mean an inclusive "or" rather than an exclusive "or." That is, unless specified otherwise, or clear from the context, the phrase, for example, "X employs A or B" is intended to mean any of the natural inclusive permutations. That is, for example the phrase "X employs A or B" is satisfied by any of the following instances: X employs A; X employs B; or X employs both A and B. Also, as used herein, including in the claims, "or" as used in a list of items prefaced by "at least one of" indicates a disjunctive list such that, for example, a list of "at least one of A, B, or C" means A or B or C or AB or AC or BC or ABC (A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

The previous description of the disclosure is provided to enable a person skilled in the art to make or use the disclosure. Various modifications to the disclosure will be readily apparent to those skilled in the art, and the common principles defined herein may be applied to other variations without departing from the spirit or scope of the disclosure. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Thus, the disclosure is not to be limited to the examples and designs described herein but is to be accorded the widest scope consistent with the principles and novel features disclosed herein.

## Claims

1. A system comprising:
a processor enabled circuit to determine occurrence of an alert event;
at least one image capturing device to capture a data stream of a region of interest, and locally store the data stream; and
a storage sub-system comprising a processing circuit configured to:
receive details of the alert event from the processor enabled circuit, and maintain an alert event log;
examine the alert event log to create an alert prediction model to predict future alert occurrences; and
generate a request signal per the future alert occurrences to request the at least one image capturing device to transmit a data stream covering a period prior to and after the alert event.

2. The system of claim 1, wherein one or both of:
(i) the processor enabled circuit is housed within the at least one image capturing device;
(ii) the processor enabled circuit is part of an event detector deployed in a vicinity of the at least one image capturing device, and configured to determine alert event based on detection of at least one parameter.

3. The system of claim 1 or 2, wherein the at least one image capturing device is configured to transmit a high-definition data stream after the alert event.

4. The system of one of claims 1 to 3, wherein the at least one image capturing device is configured to timestamp the data stream to obtain a time stamped data stream and store the time stamped data stream in an internal storage; optionally, wherein the at least one image capturing device transmits the time stamped data stream that contains a portion of video captured prior to the alert event and a portion of video captured post detection of the alert event.

5. The system of any of the preceding claims, wherein the processor enabled circuit applies one or more image processing techniques on the data stream captured by the at least one image capturing device to determine the alert event.

6. The system of any of the preceding claims, wherein the data stream transmitted by the at least one image capturing device contains footage starting from a pre-determined time period prior to the alert event and terminating at a pre-determined time period after the alert event.

7. A method comprising:
receiving, by a processing circuit, details of an alert event from a processor enabled circuit;
maintaining, by the processing circuit, an alert event log;
examining, by the processing circuit, the alert event log to generate an alert prediction model to predict future alert occurrences; and
generating, by the processing circuit, a request signal per the future alert occurrences to request at least one image capturing device to transmit a data stream covering a period prior to and after the alert event.

8. The method of claim 7, wherein one or both of:
(i) the processor enabled circuit is housed within the at least one image capturing device;
(ii) the processor enabled circuit is part of an event detector deployed in a vicinity of the at least one image capturing device, and configured to determine the alert event based on detection of at least one parameter.

9. The method of claim 7 or 8, further comprising transmitting, by the at least one image capturing device, a high-definition data stream after the alert event.

10. The method of any of claims 7 to 9, further comprising timestamping, by the at least one image capturing device, the data stream to obtain a time stamped data stream, and storing the time stamped data stream in an internal storage of the at least one image capturing device; optionally, wherein the at least one image capturing device transmits the time stamped data stream that contains a portion of video captured prior to the alert event and a portion of video captured post detection of the alert event.

11. A system comprising:
a database; and
a processing circuit to receive details of an alert event from a remote device, the processing circuit configured to:
maintain an alert event log in the database;
examine the alert event log to create an alert prediction model to predict future alert occurrences; and
generate a request signal per the future alert occurrences to request at least one image capturing device to transmit a data stream covering a period prior to and after the alert event.

12. The system of claim 11, wherein the remote device comprises a processor enabled circuit housed within the at least one image capturing device.

13. The system of claim 11 or 12, wherein the at least one image capturing device is configured to transmit a high-definition data stream after the alert event.

14. The system of any of claims 11 to 13, wherein the at least one image capturing device is configured to timestamp the data stream to obtain a time stamped data stream and store the time stamped data stream in an internal storage; optionally, wherein the at least one image capturing device transmits the time stamped data stream that contains a portion of video captured prior to the alert event and a portion of video captured post detection of the alert event.

15. The system of any of claims 11 to 14, wherein the data stream transmitted by the at least one image capturing device contains footage starting from a pre-determined time period prior to the alert event and terminating at a pre-determined time period after the alert event.
